# EUROPÄISCHE PATENTSCHRIFT

(11) **EP 1 384 123 B1**
(45) Veröffentlichungstag und Bekanntmachung des Hinweises auf die Patenterteilung: **15.09.2004**
(21) Anmeldenummer: 02730233.0
(22) Anmeldetag: 03.05.2002
(51) Int. Cl.: G05B 19/414

(54) **TRANSPORTANLAGE FÜR STÜCKGUT**
TRANSPORT FACILITY FOR ITEMS
INSTALLATION DE TRANSPORT POUR ARTICLES ISOLES

(30) Priorität: 04.05.2001 DE 10121833
(43) Veröffentlichungstag der Anmeldung: 28.01.2004
(73) Patentinhaber: KRONES AG, 93068 Neutraubling (DE)
(72) Erfinder: ZIEGLER, Manfred, 94161 Ruderting (DE)
(86) Internationale Anmeldenummer: PCT/EP2002/004879
(87) Internationale Veröffentlichungsnummer: WO 2002/091091

(56) Entgegenhaltungen:
- DE-A- 3 131 352
- DE-U- 29 710 056
- US-A- 4 904 916

## Beschreibung

Die Erfindung betrifft eine Transportanlage für Stückgut gemäß dem Oberbegriff des Anspruchs 1.

Transportanlagen dieser Art werden beispielsweise in Abfüll- und/oder Verpackungslinien der Getränke- und Lebensmittelindustrie verwendet. In der Regel besteht eine Abfülllinie aus mehreren separat aufgestellten Maschinen, die in Materialflussrichtung über ein- oder mehrspurige Transportanlagen verkettet sind, wobei ein zwei Maschinen verbindender Transporteur bei größeren Entfernungen in mehrere Einzelabschnitte mit jeweils einem eigenen Antrieb unterteilt sein kann. Zur Überwachung und Steuerung der Transportanlage sind ferner noch eine Vielzahl von Sensoren vorhanden, mit denen unter anderem die Belegung und Fördergeschwindigkeit der einzelnen Transporteurabschnitte erfassbar ist.

Bis vor kurzem erfolgte die Steuerung und Regelung derartiger Transportanlagen und ggf. auch der eingebundenen Behandlungsmaschinen durch wenigstens eine zentrale (SPS-) Steuerung, der im Normalfall auch die Frequenzumrichter für die Antriebsmotoren der einzelnen Transporteurabschnitte räumlich zugeordnet waren. Nachteiligerweise verursacht diese Konfiguration einen sternförmigen Kabelverlauf mit großen Kabellängen sowie einen hohen Montageaufwand (DE 31 31 352 C2).

Zur Vermeidung dieser Nachteile wurde bereits vorgeschlagen (DE 297 10 056 U1), den einzelnen Motoren jedes Transporteurabschnitts jeweils einen räumlich unmittelbar beigestellten Umrichter zuzuordnen, wodurch nur noch eine Ringleitung zur Energieversorgung der Antriebsmotoren erforderlich ist. Ebenso kann der für die Übertragung der Steuer- und Sensorsignale notwendige Verkabelungsaufwand durch Einsatz einer Bus-Leitung drastisch reduziert werden. Die Bus-Leitung steht mit einem zentralen Steuer-/Regelgerät (speicherprogrammierbare Steuerung, Industrie-PC oder dgl.) in Verbindung. Obwohl mit dieser Technik bereits eine spürbare Vereinfachung erreicht worden ist, erfordert auch die Verlegung einer Bus-Leitung immer noch einigen Aufwand, vor allem, wenn eine bestehende Transportanlage nachträglich räumliche Veränderungen erfahren soll.

Demgegenüber liegt der Erfindung die Aufgabe zugrunde, eine Transportanlage mit einem vereinfachten und flexiblen Signalübertragungssystem anzugeben.

Diese Aufgabe wird durch die kennzeichnenden Merkmale des Anspruchs 1 gelöst.

Durch die vorgeschlagene drahtlose Signaldatenübertragung (für Steuer-, Meß- oder Konfigurationsdaten) kann vorteilhafter Weise auf ein drahtgebundenes Datenbus-System verzichtet werden. Dies bewirkt nicht nur eine Einsparung an Kabelmaterial und Reduzierung des Arbeitsaufwandes zur Installation des Datenübertragungssystems, sondern überdies ist vorteilhafter Weise eine einfache Anpaßbarkeit bei Umbauten der Transportanlagen gegeben.

Gemäß einer Weiterbildung der Erfindung können die einem Transporteurabschnitt zugeordneten Sensoren und/oder Aktoren mit drahtlos arbeitenden Datensendern bzw. -empfängern ausgerüstet werden, wodurch Signalleitungen zum Steuermodul entfallen.

Vorteilhafte Ausgestaltungen der Erfindung sind Gegenstand der verbleibenden Unteransprüche.

Nachfolgend wird ein bevorzugtes Ausführungsbeispiel anhand der Fig. erläutert:
- Fig. 1: zeigt die Draufsicht einer Getränkeabfülllinie in schematischer Darstellung und
- Fig. 2: einen Abschnitt einer Getränkeabfülllinie in vergrößerter Darstellung.

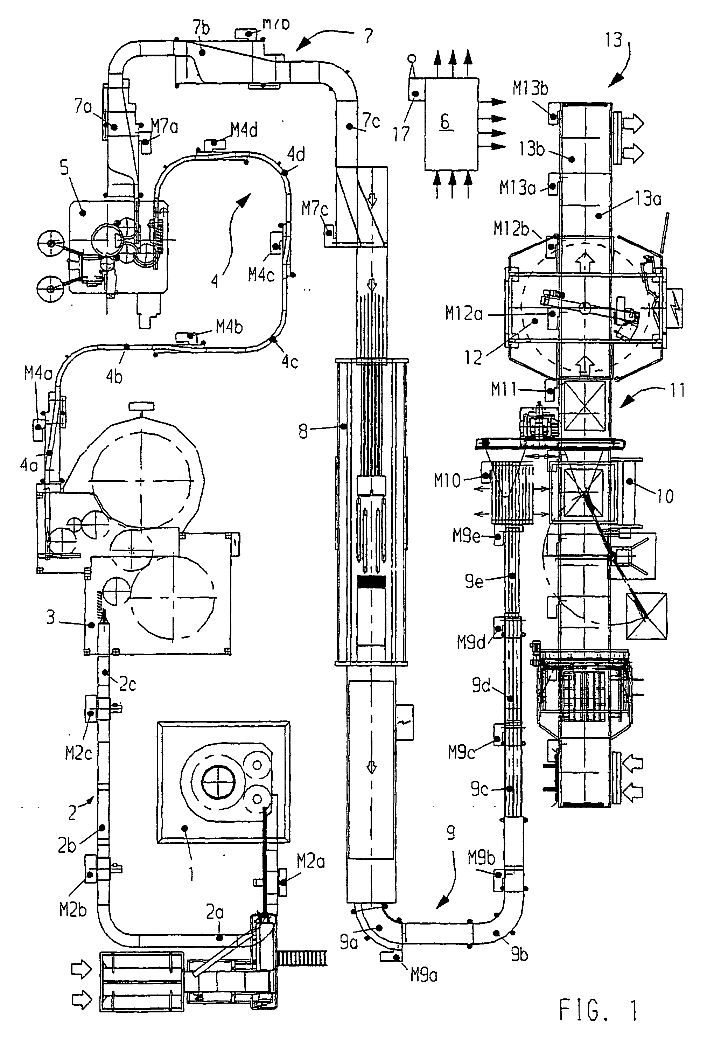

Die in Fig. 1 skizzierte Abfülllinie ist zur Herstellung und Befüllung von als Einwegbehälter dienenden Kunststoffflaschen eingerichtet. Sie weist eine Streckblasmaschine 1 auf, in der aus gespritzten Kunststoff-Preforms Flaschen geblasen werden, die über einen stationären Luftförderer 2 einspurig einem aus einem Rinser, einer Füllmaschine und einem Verschließer bestehenden Maschinenblock 3 zugeführt werden. Der genannte Luftförderer 2 besitzt in bekannter Weise zwei dem Halsdurchmesser der zu transportierenden Flaschen entsprechend beabstandete, parallelverlaufende Tragleisten (nicht dargestellt), die einen unterhalb der Flaschenmündung am Hals der Flaschen angeformten Tragring unterstützen, wobei die Vorwärtsbewegung der Flaschen durch in Förderrichtung gerichtete Luftstrahlen verursacht wird. Zur Erzeugung der Luftstrahlen besitzt der drei Abschnitte 2a-2c aufweisende Luftförderer 2 in ebenfalls bekannter Weise mehrere elektromotorisch antreibbare Gebläse, wobei die Flaschenfördergeschwindigkeit durch eine gesteuerte Beeinflussung der Luftmenge und/oder -geschwindigkeit erfolgt. Zu diesem Zweck ist beispielsweise die Drehzahl der Gebläseantriebsmotoren M2a-M2c veränderbar, vorzugsweise stufenlos. Die Drehzahlverstellung kann für alle Motoren gemeinsam und synchron zueinander oder auch bedarfsweise einzeln, d.h. individuell erfolgen.

Nach dem Ausspülen, Befüllen und Verschließen der Flaschen im Maschinenblock 3 erfolgt eine Überführung der verschlossenen Flaschen zu einer Etikettiermaschine 5. Zum Flaschentransfer ist ein beispielsweise mit Plattenscharnierband- oder Mattenketten ausgerüsteter Förderer 4 vorgesehen, der in mehrere durch jeweils wenigstens einen eigenen drehzahlveränderlichen Motor M4a-M4d antreibbare Abschnitte 4a-4d unterteilt ist.

Nach dem Ausstatten in der Etikettiermaschine 5 gelangen die Flaschen mittels eines ebenfalls mehrere Abschnitte 7a-7c mit jeweils eigenen Motoren M7a-M7c aufweisenden Förderers 7 zu einer Verpackungsmaschine 8, in der sie gruppiert, in Schrumpffolie eingeschlagen oder von einem Kartonzuschnitt umhüllt und ggf. in Displays, Kartons oder Kästen eingesetzt werden.

Der erste Abschnitt 7a des Förderers 7 ist als eine Flaschenauseinanderführung ausgebildet, die den beim Verlassen der Etikettiermaschine 5 Zwischenabstände aufweisenden einspurigen Flaschenstrom abbremst und in einen mehrbahnigen Flaschenpulk umformiert. Die Flaschenauseinanderführung besitzt stufenweise unterschiedlich schnell antreibbare, nebeneinanderliegende Förderbänder, wobei die Geschwindigkeitsabstufung entweder über mechanische Kettenrädergetriebe (Fig. 1) oder mehrere individuelle Antriebsmotoren (nicht dargestellt) erzielt wird. Die darauffolgenden, mit Matten- oder Scharnierbandketten bestückten Abschnitte 7b,7c weisen eine zum mehrspurigen Flaschentransport ausgelegte und damit zur Flaschenpufferung geeignete Förderbreite auf.

Ein Gebindeförderer 9 (Abschnitte 9a-9e, Antriebsmotoren M9a-M9e) transportiert die Gebinde von der Verpackungsmaschine 8 zu einer Palettiermaschine 10 (Antriebsmotor M10 für Gebindelagenzuführung), wo mehrere Gebindelagen schichtweise übereinander auf eine Palette gestellt werden. Von der Palettiermaschine 10 aus werden die beladenen Paletten über einen einen Antriebsmotor M11 aufweisenden Rollenförderer 11 einer Folienverpackungsmaschine 12 (Antriebsmotoren M12a, M12b) und danach durch einen weiteren Rollenförderer 13 (Abschnitte 13a,b mit Antriebsmotoren M13a, M13b) einem Lager oder Palettenabnahmeplatz zugeführt.

Im störungsfreien Betrieb wird die Fördergeschwindigkeit der einzelnen, kontinuierlich antreibbaren Transporteurabschnitte 7a-7c durch eine Steuerung 6 so eingestellt, dass einerseits immer genügend Flaschen zur unterbrechungsfreien Versorgung der Verpackungsmaschine 8 bereitgehalten werden, um kurzzeitige Störungen der Etikettiermaschine 5 bzw. des vorgeordneten Maschinenblocks 3 überbrücken zu können, und andererseits ausreichend Pufferfläche auf dem Förderer 7 freigehalten wird, um bei einem vorübergehenden Stillstand der Verpackungsmaschine 8 die aus der Etikettiermaschine 5 bzw. dem Maschinenblock 3 kommenden Flaschen aufnehmen zu können. Die Geschwindigkeit der Abschnitte 4a-4c des kontinuierlich arbeitenden Förderers 4 wird ebenfalls durch die Steuerung 6 situationsabhängig eingestellt. Auch die Antriebe M2a-M13b der Abschnitte 2a-13b des Luftförderers 2, des Gebindeförderers 9 und der Rollenförderer 11 und 13 werden von der Steuerung 6 zur Geschwindigkeitsveränderung beeinflußt.

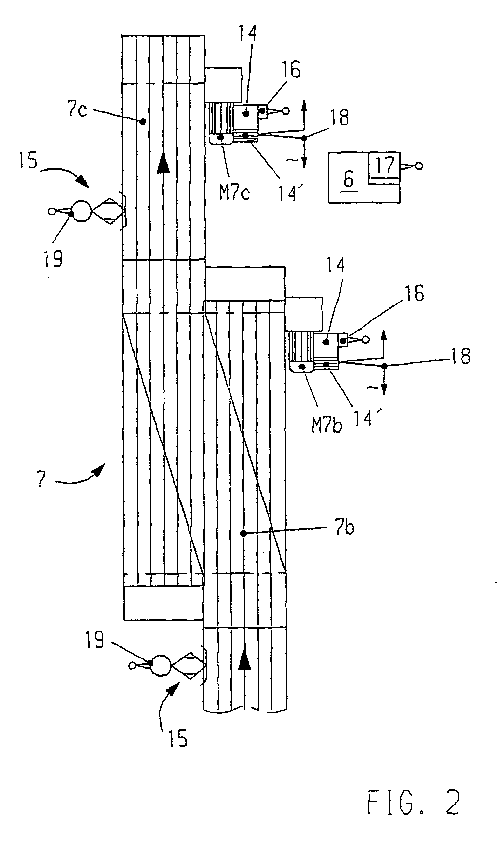

Zur Energieversorgung sind die Elektromotoren der Transportanlage in an sich bekannter Weise an einen in Figur 1 nicht dargestellten Energiebus 18 (Fig. 2) angeschlossen. Bei den Motoren M2a-M13b handelt es sich um polumschaltbare oder stufenlos drehzahlverstellbare Antriebe. Bevorzugt werden Drehfeldmotoren (Asynchron-, Synchronmotoren) verwendet.

Für die Drehzahlverstellung sind Frequenzumrichter vorgesehen, wobei bevorzugt jeder Motor einen eigenen, örtlich unmittelbar zugeordneten Frequenzumrichter 14' aufweist. Diese Frequenzumrichter 14' sind Bestandteil von Steuermodulen oder bilden selbst Steuermodule 14 für die Motoren (Fig.2) und können als eine gemeinsame Baugruppe am Motorgehäuse befestigt sein.

An den einzelnen Steuermodulen 14 sind die den jeweiligen Transporteurabschnitten, z.B. 7b, 7c, zugeordneten Sensoren 15 (Lichtschranken, Taster, Näherungsinitiatoren oder dgl.) und/oder Aktoren (Flaschenausschleusvorrichtungen, -stopper oder Verteilweichen) angeschlossen.

Den Steuermodulen 14 ist wenigstens ein drahtlos arbeitender Signalempfänger, bevorzugt jedoch eine Signalempfänger- und -sendeeinheit 16, zum bidirektionalen Signalaustausch mit der Steuerung 6 zugeordnet. Idealerweise bildet die Signalempfänger- und sendeeinheit 16 mit dem jeweiligen Steuermodul 14 eine gemeinsam ausgeführte Baueinheit.

Die Steuerung 6 verfügt über wenigstens einen drahtlos arbeitenden Signalsender, insbesondere über eine kombinierte Signalempfänger- und -sendeeinheit 17. Die Signalübertragung erfolgt im Ausführungsbeispiel per Funk. Es wäre alternativ auch eine optoelektronische Übertragung (z.B. per Infrarot) denkbar.

Gemäß Fig. 2 können die zur Ermittlung der Transporteurbelegung vorgesehenen Sensoren 15 mit jeweils einer Signalsendeeinheit 19 ausgestattet sein, wodurch eine Verdrahtung mit den Steuermodulen 14 überflüssig ist. Zur Energieversorgung der Sensoren können Batterien und/oder Akkus vorgesehen werden. Auch ein selbstgeneratorischer Betrieb durch einen von Förderbändern antreibbaren Generator oder eine Energieversorgung durch Solarzellen, die aus der *Hallenbeleuchtung elektrische Energie erzeugen, wäre denkbar.*

Eine Transportanlage entsprechend der Fig. 1 weist bevorzugt für jedes Steuermodul 14 eine eigene Signalempfänger- und -sendeeinheit 16 auf . Abweichend davon können mehrere Steuermodule zusammengefaßt, z.B. den Förderstrecken 2, 4, 7, 9, 11, 13 zugeordnet, an jeweils nur einer gemeinsamen Signalempfänger- und -sendeeinheit 16 angeschlossen sein.

Die in die Fülllinie integrierten, eigene Antriebe aufweisenden Behandlungsmaschinen 1, 3, 5, 8, 10 und 12 können optional ebenfalls jeweils mit einem eine drahtlos arbeitende Signalempfänger und -sendeinheit aufweisenden Steuermodul (nicht dargestellt) ausgerüstet sein und dadurch mit der Steuerung 6 Signale bidirektional austauschen.

Es besteht die Möglichkeit, dass die Steuermodule der Transporteurabschnitte und der Behandlungsmaschinen untereinander drahtlos Signale auch ohne Vermittlung über die Steuerung 6 austauschen bzw. eines der Steuermodule die Funktion der zentralen Steuerung 6 übernimmt und der Signalaustausch über dieses Steuermodul abgewickelt wird, so dass eine separate Steuerung 6 ggf. entbehrlich ist.

Die Steuermodule 14 können mit Datenspeichern zur Zwischenpufferung von Signaldaten oder Speicherung von Steuerprogrammen ausgestattet sein.

Um Störungen und Fehlsteuerungen zu vermeiden, kann es von Vorteil sein, den Signalaustausch in kodierter Form abzuwickeln und Steuerbefehle nur nach vorheriger Quittierung durch den vorgesehenen Empfänger ausführen zu lassen.

## Patentansprüche

1. Transportanlage für Stückgut wie Flaschen, Dosen, Kartons, Trays oder dgl., bestehend aus wenigstens zwei Transporteurabschnitten (2a-13b), die jeweils wenigstens einen eigenen drehzahlveränderlichen Antrieb (M2a-M13b) mit einem zugeordneten Steuermodul (14) aufweisen, wobei das wenigstens eine Steuermodul (14) mit einer zentralen Steuer-/Regeleinheit (6) zur Signalübertragung in Verbindung steht, **dadurch gekennzeichnet, dass** die Steuer-/Regeleinheit (6) wenigstens einen Sender (17) und das Steuermodul (14) wenigstens einen Empfänger (16) zur drahtosen Signalübertragung, insbesondere per Funk, aufweisen.

2. Transportanlage nach Anspruch 1, **dadurch gekennzeichnet, dass** sowohl die Steuer-/Regeleinheit (6) als auch das Steuermodul (14) jeweils einen Sender und Empfänger (16,17) zur bidirektionalen Signalübertragung aufweisen.

3. Transportanlage nach Anspruch 1 oder 2, **dadurch gekennzeichnet, dass** den einzelnen Transporteurabschnitten (2a-13b) Sensoren (15) und/oder Aktoren zugeordnet sind, die mit dem entsprechenden Steuermodul (14) des jeweiligen Transporteurabschnitts zum Signalaustausch in Verbindung stehen, vorzugsweise bidirektional, insbesondere drahtlos.

4. Transportanlage nach einem der Ansprüche 1 bis 3, **dadurch gekennzeichnet, dass** die Transportanlage (2,4,7,9,11,13) mehrere Steuermodule (14) aufweist, die untereinander drahtlos Signale austauschen, vorzugsweise bidirektional.

5. Transportanlage nach Anspruch 4, **dadurch gekennzeichnet, dass** eines der Steuermodule (14) als Steuer-/Regeleinheit dient und der Signalaustausch zwischen den einzelnen Steuermodulen (14) über dieses die Funktion der Steuer-/Regeleinheit übernehmende Steuermodul vermittelbar ist.

6. Transportanlage nach wenigstens einem der Ansprüche 1 bis 5, **dadurch gekennzeichnet, dass** die Transportanlage (2,4,7,9,11,13) einen Energiebus (18) zur Versorgung der Antriebe (M2a bis M13b) der einzelnen Transporteurabschnitte (2a bis 13b) aufweist.

7. Transportanlage nach wenigstens einem der Ansprüche 1 bis 6, **dadurch gekennzeichnet, dass** die Transporteurabschnitte als Förderbänder und/oder Rollenförderer und/oder Luftförderer mit stationärem Gestell ausgebildet sind.

8. Transportanlage nach wenigstens einem der Ansprüche 1 bis 7, **dadurch gekennzeichnet, dass** einzelne Transporteurabschnitte durch in die Transportanlage eingebundene Verarbeitungsmaschinen (1,3,5,8,10,12), wie Blas-, Reinigungs-, Inspektions-, Füll-, Verschließ-, Etikettier-, Verpackungs- oder Palettiermaschinen gebildet werden.

9. Transportanlage nach Anspruch 8, **dadurch gekennzeichnet, dass** die Verarbeitungsmaschinen (1,3,5,8,10,12) wenigstens jeweils einen drehzahlveränderlichen Antrieb, ein Steuermodul sowie einen Sender und/oder Empfänger zur drahtlosen, vorzugsweise bidirektionalen Signalübertragung aufweisen.

10. Transportanlage nach Anspruch 9, **dadurch gekennzeichnet, dass** die Verarbeitungsmaschinen drehzahlveränderlich antreibbare Transportelemente wie Sternräder, Förderbänder, Riemen-, Ketten-, Rollen- oder Luftförderer aufweisen.

11. Transportanlage nach einem der Ansprüche 1 bis 10, **dadurch gekennzeichnet, dass** die Drehzahl der Antriebsmotoren (M2a bis M13b) der Transporteurabschnitte (2a bis 13b) und/oder der Verarbeitungsmaschinen (1,3,5,8) zumindest bereichsweise gemeinsam synchron zueinander und/oder bedarfsweise unabhängig individuell veränderbar ist.

12. Transportanlage nach wenigstens einem der vorhergehenden Ansprüche 1 bis 11, **dadurch gekennzeichnet, dass** jeweils ein Steuermodul (14) und/oder ein Frequenzumrichter (14') und/oder eine Signalempfänger- und -sendeeinheit (16) eine Baueinheit bilden, die vorzugsweise am Gehäuse der Antriebsmotoren angeordnet ist.

13. Transportanlage nach wenigstens einem der vorhergehenden Ansprüche 1 bis 12, **dadurch gekennzeichnet, dass** die Steuermodule (14) freiprogrammierbare Speicher besitzen.

14. Transportanlage nach einem der Ansprüche 1 bis 13, **dadurch gekennzeichnet, dass** sie Bestandteil einer Füll- und/oder Verpackungslinie für Getränke oder Lebensmittel ist.

15. Transportanlage nach Anspruch 3, **dadurch gekennzeichnet, dass** die Energieversorgung der Sensoren und/oder Aktoren durch zugeordnete Batterien und/oder Akkus und/oder Solarzellen und/oder einen durch die Transportanlage antreibbaren Generator erfolgt.

## Claims

1. Conveyor for packaged goods such as bottles, cans, boxes, trays and so on, consisting of at least two carrier sections (2a-13b), each of which has at least one separate variable-speed drive mechanism (M2a-M13b) with a control module (14) allocated to it, in which at least one control module (14) is connected to a central control/regulation unit (6) for signal transmission, **characterised in that** the control/regulation unit (6) has at least one transmitter (17) and the control module (14) has at least one receiver (16) for wireless signal transmission, in particular by radio.

2. Conveyor according to claim 1, **characterised in that** both the control/regulation unit (6) and the control module (14) have a transmitter and receiver (16, 17) for bi-directional signal transmission.

3. Conveyor according to claim 1 or 2, **characterised in that** sensors (15) and/or actuators are allocated to the individual carrier sections (2a-13b) and are connected to the corresponding control module (14) on each carrier section for signal exchange, preferably bi-directionally and in particular wirelessly.

4. Conveyor according of one of claims 1 to 3, **characterised in that** the conveyor (2, 4, 7, 9, 11, 13) has a number of control modules (14) that mutually exchange wireless signals, preferably bi-directionally.

5. Conveyor according to claim 4, **characterised in that** one of the control modules (14) acts as a control/regulation unit and the signal exchange between the individual control modules (14) is switchable via that control module which takes over the function of the control/regulation unit.

6. Conveyor according to at least one of claims 1 to 5, **characterised in that** the conveyor (2, 4, 7, 9, 11, 13) has a power bus (18) to supply the drive mechanisms (M2a to M13b) for the individual carrier sections (2a to 13b).

7. Conveyor according to at least one of claims 1 to 6, **characterised in that** the carrier sections are in the form of band conveyors and/or roller conveyors and/or pneumatic conveyors with a fixed frame.

8. Conveyor according to at least one of claims 1 to 7, **characterised in that** individual carrier sections are formed by processing machines (1, 3, 5, 8, 10, 12) integrated in the conveyor, such as blowing, cleaning, inspection, filling, sealing, labelling, packaging or palleting machines.

9. Conveyor according to claim 8, **characterised in that** the processing machines (1, 3, 5, 8, 10, 12) each have at least one variable-speed drive mechanism, one control module and a transmitter and/or receiver for wireless, preferably bi-directional, signal transmission.

10. Conveyor according to claim 9, **characterised in that** the processing machines have variable-speed drivable conveyance means such as star wheels, band conveyors or belt, chain, roller or pneumatic conveyors.

11. Conveyor according to one of claims 1 to 10, **characterised in that** the speeds of the drive motors (M2a to M13b) for the carrier sections (2a to 13b) and/or the processing machines (1, 3, 5, 8) are individually variable synchronously in relation to each other as a whole and/or independently if required, by zone at least.

12. Conveyor according to at least one of the foregoing claims 1 to 11, **characterised in that** in each case a control module (14) and/or a frequency converter (14') and/or a signal receiver and transmitter unit (16) form a physical unit which is preferably located on the casing of the drive motors.

13. Conveyor according to one of the foregoing claims 1 to 12, **characterised in that** the control modules (14) have programmable storage devices.

14. Conveyor according to one of claims 1 to 13, **characterised in that** it is part of a filling and/or packaging line for drinks or foodstuffs.

15. Conveyor according to claim 3, **characterised in that** the power supply to the sensors and/or actuators is provided by assigned batteries and/or accumulators and/or solar cells and/or a generator drivable by the conveyor.

## Revendications

1. Installation de transport pour des objets comme des bouteilles, des boîtes, des cartons, des plateaux ou autres, composée d'au moins deux segments transporteurs (2a à 13b) qui présentent chacun au moins un entraînement (M2a à M13b) propre dont on peut modifier la vitesse de rotation, comportant un module de commande (14) associé, le module de commande (14) au moins au nombre d'un étant en liaison avec une unité centrale de commande/de réglage (6) destinée à transmettre des signaux,
**caractérisée en ce que**
l'unité de commande / de réglage (6) présente au moins un émetteur (17) et le module de commande (14) au moins un récepteur (16) pour transmettre sans fil les signaux, en particulier par radio.

2. Installation de transport selon la revendication 1,
**caractérisée en ce que**
l'unité de commande/de réglage (6) aussi bien que le module de commande (14) présentent chacun un émetteur et un récepteur (16, 17) pour transmettre les signaux dans les deux sens.

3. Installation de transport selon la revendication 1 ou 2,
**caractérisée en ce qu'**
aux segments transporteurs (2a à 13b) indépendants sont associés des détecteurs (15) et/ou des actionneurs qui sont en liaison, de préférence bidirectionnelle, en particulier sans fil, avec le module de commande (14) correspondant du segment transporteur concerné afin d'échanger des signaux.

4. Installation de transport selon l'une des revendications 1 à 3,
**caractérisée en ce que**
l'installation de transport (2, 4, 7, 9, 11, 13) présente plusieurs modules de commande (14) qui échangent entre eux des signaux sans fil, de préférence dans les deux sens.

5. Installation de transport selon la revendication 4,
**caractérisée en ce que**
l'un des modules de commande (14) sert d'unité de commande/de réglage et l'échange de signaux entre les modules de commande (14) indépendants peut être établi par l'intermédiaire de ce module de commande qui assume la fonction d'unité de commande/de réglage.

6. Installation de transport selon au moins l'une des revendications 1 à 5,
**caractérisée en ce que**
l'installation de transport (2, 4, 7, 9, 11, 13) présente un bus d'énergie (18) destiné à alimenter les entraînements (M2a à M13b) des segments transporteurs (2a à 13b) indépendants.

7. Installation de transport selon au moins l'une des revendications 1 à 6,
**caractérisée en ce que**
les segments transporteurs prennent la forme de bandes convoyeuses et/ou de convoyeurs à rouleaux et/ou de convoyeurs pneumatiques munis d'un bâti fixe.

8. Installation de transport selon au moins l'une des revendications 1 à 7,
**caractérisée en ce que**
les segments transporteurs indépendants sont formés par des machines de traitement (1, 3, 5, 8, 10, 12) comprises dans l'installation de transport, comme des machines de soufflage, de nettoyage, d'inspection, de remplissage, de fermeture, d'étiquetage, de conditionnement ou de palettisation.

9. Installation de transport selon la revendication 8,
**caractérisée en ce que**
les machines de traitement (1, 3, 5, 8, 10, 12) présentent chacune au moins un entraînement dont on peut modifier la vitesse de rotation, un module de commande ainsi qu'un émetteur et/ou un récepteur pour transmettre des signaux, de préférence dans les deux sens.

10. Installation de transport selon la revendication 9,
**caractérisée en ce que**
les machines de traitement présentent des éléments de transport qui peuvent être entraînés en modifiant la vitesse de rotation, comme des roues en étoile, des bandes convoyeuses, des convoyeurs à courroie, à chaîne, à rouleaux ou pneumatiques.

11. Installation de transport selon l'une des revendications 1 à 10,
**caractérisée en ce que**
la vitesse de rotation des moteurs d'entraînement (M2a à M13b) des segments transporteurs (2a à 13b) et/ou des machines de traitement (1, 3, 5, 8) peut être modifiée au moins par endroits globalement en synchronie mutuelle et/ou le cas échéant chacune indépendamment.

12. Installation de transport selon au moins l'une des revendications 1 à 11,
**caractérisée en ce qu'**
un module de commande (14) et/ou un convertisseur de fréquence (14') et/ou une unité de réception et d'émission de signaux (16) forment une unité structurelle placée de préférence sur le boîtier des moteurs d'entraînement.

13. Installation de transport selon au moins l'une des revendications 1 à 12,
**caractérisée en ce que**
les modules de commande (14) possèdent des mémoires librement programmables.

14. Installation de transport selon l'une des revendications 1 à 13,
**caractérisée en ce qu'**
elle est une partie constitutive d'une chaîne de remplissage et/ou de conditionnement pour des boissons ou des aliments.

15. Installation de transport selon la revendication 3,
**caractérisée en ce que**
l'alimentation en énergie des détecteurs et/ou des actionneurs est réalisée par des batteries et/ou des accumulateurs et/ou des cellules solaires associés et/ou un générateur qui peut être entraîné par l'installation de transport.
